Europäisches Patentamt

European Patent Office

Office européen des brevets

(19)

(11) EP 1 589 761 A1

(12) EUROPEAN PATENT APPLICATION

(43) Date of publication:
26.10.2005 Bulletin 2005/43

(51) Int Cl.⁷: H04N 7/26

(21) Application number: 04101594.2

(22) Date of filing: 19.04.2004

(84) Designated Contracting States:
AT BE BG CH CY CZ DE DK EE ES FI FR GB GR
HU IE IT LI LU MC NL PL PT RO SE SI SK TR
Designated Extension States:
AL LT LV MK

(71) Applicant: Oplayo Oy
00180 Helsinki (FI)

(72) Inventors:
• Soukka, Kalle
  00100, Helsinki (FI)

• Pohjola, Teemu
  02660, Espoo (FI)
• Kesäniemi, Martti
  00700, Helsinki (FI)
• Myllymäki, Tero
  00530, Helsinki (FI)

(74) Representative: Savela, Antti-Jussi Tapani et al
Patent Agency Compatent Ltd.
Hitsaajankatu 6
00810 Helsinki (FI)

(54) **A codec adapted to operate in rgb color space**

(57)     A problem of the prior art compression techniques is that in order to achieve efficient compression of a video encoders use YUV color components but displays use RGB components, which results in high memory requirements and a decrease of decoding capacity in a receiving terminal. Therefore, prior art encoding and decoding techniques are not best suitable for receiving terminals having limited processing power and scarce memory. The problem is solved by a compression codec that, like any prior art codec, uses YUV or similar color components for compression of frames, wherein the known efficient compression methods can be used. But contrary to the prior art codecs, the decoder part (203) of the codec uses RGB color components as its internal color representation and accordingly outputs a decoded frame in the RGB color space. Accordingly, the decoder (207) of a receiving terminal uses RGB color components while restoring the blocks of a frame.

FIG. 2

EP 1 589 761 A1

**EP 1 589 761 A1**

### Description

### Technical Field

The present invention relates generally to video information delivery systems, and more particularly to encoders producing compressed bit streams adapted to receiving terminals having limited processing power and scarce memory. The invention also relates to decoders having limited decoding capacity.

### Background Art

The high bit rates that result from the various types of digital video make their transmission through their intended channels very difficult. Even movies with modest frame rates and dimensions would require bandwidth that is far in excess of most fixed and, in particular, all wireless Internet connections.

Although significant gains in transmission and processor technology have been achieved in recent years, it is primarily the reduction of the amount of data that needs to be stored, transmitted, and processed that has made widespread use of digital video a possibility. This reduction of bandwidth has been made possible more than anything else by advances in compression technology.

Mobile communications is currently one of the fastest growing markets although today the functionalities of mobile communications are rather limited. It is expected that image information, especially real-time video information, will greatly add value to mobile communications. Low cost mobile video transmission is highly sought for for many practical applications, e.g., mobile visual communications, live TV news reports, mobile surveillance, computer games, etc. Available bandwidth is one of the major limitations to real-time mobile video transmission and therefore such a transmission can only be achieved when a highly efficient compression algorithm with a very low implementation complexity can be implemented.

Compression is a reversible conversion of data to a format that requires fewer bits, usually performed so that the data can be stored or transmitted more efficiently. If the inverse of the process, decompression, produces an exact replica of the original data, then the compression is lossless. Compression with loss, in other words "lossy" compression, does not allow reproduction of an exact replica of the original image, but allows only an approximation of the original to be generated. However, lossy compression has a higher compression ratio

All image and video compression techniques utilize the existing correlations within the frames, on one hand, and the understanding of the limitations of the human visual system, on the other. The correlations, such as stationary objects and areas with constant coloring, may be compressed losslessly, while the omission of invisible details is lossy. Further compression requires compromises to be made in the accuracy of the details and colors in the reproduced images resulting, in blurred and/or blocky imagery.

Intra-frame compression techniques can be applied to individual frames of a video sequence. It exploits the redundancy within the image, known as spatial redundancy.

Widely known intra-frame coding methods are sub-sampling, coarse quantization, vector quantization and transform coding. Sub-sampling reduces the number of pixels required to describe an image. In coarse quantization the numbers of bits used to describe each pixel are reduced. In vector quantization the input data stream is first divided into blocks. A block can be any arbitrary area of pixels in the frame. The block can consist of one pixel at minimum or the whole frame at maximum. A pre-defined table contains a set of patterns for blocks and each block is coded using the pattern from the table that is most similar. The Discrete Cosine Transform (DCT) is frequently used as an image compression technique. It transforms an image from the spatial domain to the frequency domain. Large images are usually decomposed into smaller square blocks and each block is coded separately. As a result, the DCT represents a block as a matrix of coefficients that can be coarsely quantized.

Inter-frame compression is applied to a sequence of video frames, rather than a single image. Because in most cases relatively little changes from one video frame to the next, inter-frame compression exploits the similarities between successive frames, known as temporal redundancy, to reduce the volume of data required describing the sequence. There are several inter-frame compression techniques of various degrees of complexity. Most of them attempt to more efficiently describe the sequence by reusing parts of frames the receiver already has, in order to construct new frames. Widely used techniques are Block Based Difference Coding and Block Based Motion Compensation.

In Block Based Difference Coding the frames are divided into non-overlapping blocks and each block is compared with its counterpart in the previous frame. Then only blocks that change significantly need be updated. It is worth noting that only objects that remain stationary within the image can be effectively coded. Therefore, a motion compensation method must be used for coding moving objects.

Block based motion compensation produces an approximation of a frame by reusing data contained in the frame's predecessor. This is completed in three stages. First, the frame to be encoded, i.e. the current frame, is divided into uniform non-overlapping blocks. Then each block in the current frame is compared to areas of similar size from the preceding (past) frame in order to find an area that is similar. A block from the current frame for which a similar area is sought is known as a target block. The location of the similar or matching block in the past frame might be different from the location of the target block in the current frame. The relative difference in locations is known as the motion vector. Finally, when coding each block of the current frame, the motion vector detailing the position (in the past frame) of the target block's match is encoded in place of the target block itself. Because fewer bits are required to code a motion vector than to code actual blocks, compression is achieved.

During decompression, the decoder uses the motion vectors to find the matching blocks in the past frame, which it has already received, and copies the matching blocks from the past frame into the appropriate positions in the current frame, thus reconstructing the image.

Motion compensation may also be bidirectional. Then matching blocks from both a past frame and a future frame are used to code the current frame. A future frame is a frame that is displayed after the current frame. Bidirectional compression is much more successful than compression that uses only a single past frame, because information that is not to be found in the past frame might be found in the future frame. This allows more blocks to be replaced by motion vectors. Bi-directional motion compensation, however, requires that frames are encoded and transmitted in a different order from which the will be displayed.

In practice, video compression is performed on block-basis, i.e. the current frame is first divided into uniform non-overlapping blocks and then each block is compressed separately. Various intra-frame and inter-frame compression modes are applied to a block and the best mode for the block is selected according to a predetermined selection criterion that may be a cost function. Most often the cost functions stress byte usage of the compressed block and distortion. The distortion is calculated by comparing the decompressed block with the original uncompressed block and using some matching criteria.

Pursuant to the complex calculation that is needed for compressing video, proper selection of the color representation is extremely important. Most video cameras and displays of today use a color signal composed of red, green and blue color components. However, an RGB signal is not very well suitable for compression, because of the high amount of bits of each color component. Since the human eye is more sensitive to differences in brightness than in colors, it is possible to reduce the resolution of color components. Therefore, the most compression methods use a composite video signal comprising of one component representing brightness (Y) information and at least two components representing color information. The components are obtained by applying a linear transformation to the RGB signal. Usually the resolution used for color components is half or even only a quarter of the brightness component's resolution. Depending on the linear transformation formula different types of composite video signals are created; most commonly used signals are YUV, YIQ, YCbCr, YDbDr, YPbPr, and YUW.

For example, in the YUV video signal Y represents luminance information and U and V represent chrominance i.e. color information.

YUV-components are transformed from the RGB components as follows (1):

$$Y = 0,299R + 0,587G + 0.114B$$
$$U = 0,493(B - Y)$$
$$V = 0,877(R - Y)$$
(1)

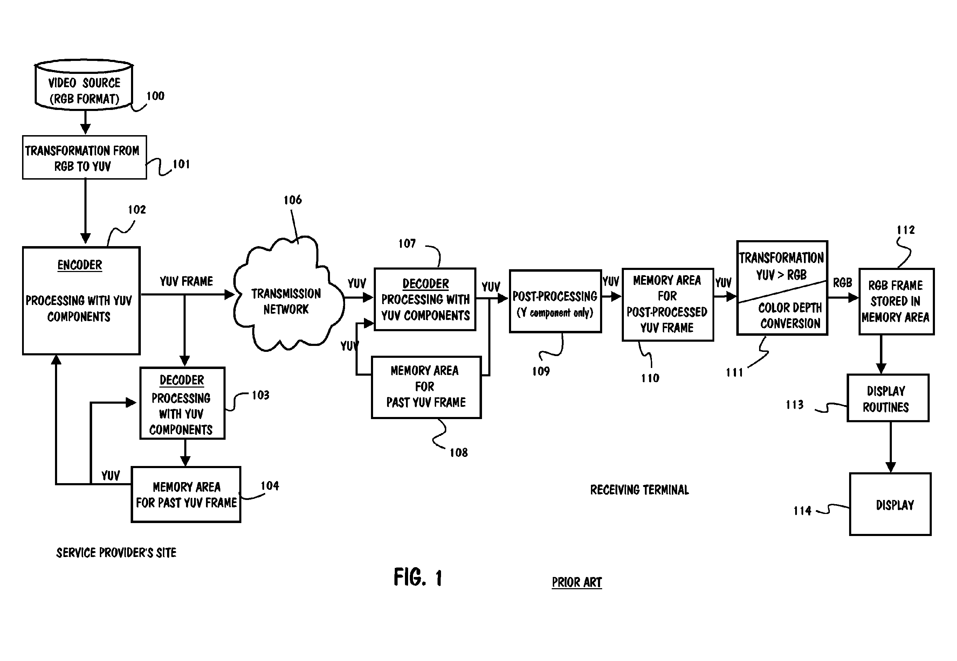

FIG. 1 depicts elements used for a prior art video encoding/decoding process. A video to be encoded is fetched from a video source **100**. Usually the original video is stored in the RGB color format. Therefore, prior to applying the video to the codec (coder +decoder), a transformer **101** performs color space transformation from RGB to YUV based on the formulas above. Naturally, transformation to some other composite video signal as YUV may be carried out. Then the encoder **102** compresses video frames of each YUV component with methods as described above. If necessary a residual coding may also be applied to one or more of the compressed blocks of the frame for increasing the quality. Usually residual coding is done for Y- components only. Finally the encoder outputs compressed YUV frames for further transmission via a transmission network to a receiving terminal. The decoder part **103** of the codec restores the frame and stores it temporarily in a memory area **104.** The frame in the memory area acts as the past frame for the codec's decoder and encoder parts.

Correspondingly, the decoder **107** of the receiving terminal restores YUV images from the compressed YUV data received via the transmission network **106**. A memory **108** in the decoder's feedback loop is needed for storing temporarily a YUV frame that is used for decoding the next YUV frame.

Then unit **109** post-processes the YUV images for removing artifacts. Post-processing, also known as de-blocking, is carried out so that pixels adjacent to block boundaries are checked. Based on changes of the luminance values of the pixels across the block boundaries it is decided whether and which kind of post-processing is needed.

Usually luminance values of the pixels near boundaries are corrected so that differences between the values are rather low, which smoothens the boundaries.

Post-processing requires a memory from which the YUV image is read but in practice the post-processing unit **109** may share with the decoder the same area of the memory. However, the post-processed YUV frame is temporarily stored in another memory area **110**.

Thereafter the post-processed YUV frame is transformed to a RGB frame in block **111** and the resulting RGB image is temporarily stored in memory area **112**. Unit **113** that carries out display routines of the receiving terminal reads the RGB image from the memory, and finally sends the image with the receiving terminal's native color depth to display **114**. The most commonly used color depth is 24 bits (8 bits for each component).

A drawback in the known decoders of receiving terminals of Fig. 1 is bound with color space transformations. If post-processing is done after the feedback loop to the decoder as in FIG. 1, the post-processed image has to be kept as a separate image in memory **110**. A receiver can do color space conversion from YUV to RGB and color depth conversion at the same time but the operation requires one more image in memory **112**. Thus, the same image is stored at the same time at least in three memory areas: a YUV image restored by the decoder is found in memory **108**, the post-processed image is stored in memory area **110** and the image converted to the RGB space is kept in the memory **112**. This means that the receiving terminal should be provided with sufficient free memory for the converted image. However, the decoder memory footprint, i.e., the amount of the memory reserved by the decoder, depends both on the display resolution and the internal color depth of the codec in use as well as on the algorithm used in compression. Usually, the decoder uses all the available memory that is not reserved for images. Therefore decoding capacity of a low-power receiving terminal having scarce memory decreases pursuant to the need for storing images.

Further, both the conversion from the YUV color space to RGB, as well as the conversion to native color depth, consumes processing power. In low-power receiving terminals, where all processing power is needed for decoding purposes, any additional conversions reduce the compression complexity that might be used and frame rate that the decoder can handle. In addition, the larger the frame size is the more power is required for calculations and processing.

### Summary of the Invention

In consequence, a problem of the prior art compression techniques is that in order to achieve efficient compression of a video the encoder uses a composite video signal comprising a separate brightness component Y and separate color components. This results in high memory requirements and a decrease of decoding capacity in the receiving terminal due to the fact that the terminal has to use the RGB color space for displaying a video. Therefore, prior art encoding and decoding techniques are not best suitable for receiving terminals having limited processing power and scarce memory. Most low-end mobile phones today are such terminals, for example.

One objective of the present invention is to find a solution to said problem by providing an encoding and decoding method that avoids using a composite video signal comprising a separate brightness component, particularly when decoding video.

The objective is achieved by a codec, that like any prior art codec, uses a composite video signal comprising a separate brightness component and separate color components for the compression of frames, wherein the known efficient compression methods can be used. But contrary to the prior art codecs, the decoder part of the codec uses color components not including any separate brightness component as its internal color representation and accordingly outputs a decoded frame in the other color space. Preferably the other color components belong to the RGB color space. For example, the decoder performs most decoding operations by using RGB color components of decoded past frames or decoded RGB blocks of the current frame. YUV color components are used for decoding operations only when pixel values in the RGB format from past frames or previous blocks of the current frame cannot be utilized for calculating pixel values for a block. In the last mentioned case the encoder part of the codec had compressed a block without using knowledge about pixels of neighboring blocks or past frames.

Because the encoder part of the codec operates in a color space comprising a separate brightness component and separate color components but the decoder part of the codec operates in a color space not including a separate brightness component and consequently outputs frames belonging to said latter color space, those frames must be transformed to the color space comprising a separate brightness component and separate color components prior to feeding back to the encoder part.

The objective is also achieved by a decoder for a receiving terminal that is adapted to operate similar to the decoder part of the codec. Thus, the decoder receives via a transmission network an encoded video compressed in a color space comprising a separate brightness component and separate color components. But contrary to the decoders of prior art receiving terminals, it uses RGB color components, for example, while restoring the blocks of a frame. In other words, the decoder performs most decoding operations using RGB color components of decoded past frames or already decoded RGB blocks of the current frame. Components of composite video signal comprising a separate brightness component and separate color components are used for decoding operations only when pixels values in the RGB format from past frames or previous blocks of the current frame cannot be utilized for calculating pixel values for a block. The restored frame in the RGB format is stored in a memory from which it is read as the past frame when the decoder is decoding the current frame.

Residual coded brightness (Y) components in the received frame are decoded in the RGB color space, for example, by applying the same difference D for each RGB color component, wherein residual decoded components R', B' G' are R'= R+D, B' = B+D and G' = G+D.

In addition to storing the restored frame in the RGB format said frame is post-processed. Contrary to the prior-art methods that process Y component only, the post-processing is done for each of the RGB components. The post-processed RGB frame is stored in a memory from which display routines read it for presentation of the image on the display.

As to the receiving terminal the invention makes it possible to give up color space transformation from the color space used in encoding, YUV for example, to RGB. Further, if the encoder at the transmitting end is designed to keep decoded images in the same color format and depth as used by the receiving terminal, the decoded frames can be drawn to display without any additional time and memory-consuming color-depth conversions. This diminishes memory usage in the receiving terminals.

**Description of the Drawings**

In the drawings

Fig. 1    depicts elements used in a prior art video encoding/decoding chain;

Fig. 2    illustrates elements used in a video encoding/decoding chain according to the invention;

Fig. 3    shows compression of the blocks of a YUV frame;

Fig. 4    is a flow chart of decompression steps;

Fig. 5    illustrates a decompressed frame;

Fig. 6    illustrates different ways to decode a block in RGB format;

Fig. 7    is another flow chart of the decompression steps;

**Detailed Description**

Henceforward, it is assumed that the color space used in encoding is YUV. However, it should be noted that any other composite video signal comprising a separate brightness component and separate color components might be used as well.

The present invention is based on the insight that although known compression methods are used for operating in the YUV color space a great deal of these methods uses algorithms that are not bound with a particular color space. Therefore decompression can be done in another color space than in the YUV space. For example, when an inter-frame compression method is used, then motion compensation for decoding a block is calculated traditionally for each of color components Y, U and V. But the same calculations can be made using R, G and B color components as well. Furthermore, when an intra-frame compression method is used, some prediction method for example, pixel values of the block of a frame being currently decoded are calculated from other, often neighboring, pixel values in the same frame. The calculations are applied to each color component Y, U, and V, but, in general, the same calculations are applicable also to the RGB color components. In summary, when color components of pixels of the past frame or color components of pixels of previously decoded blocks of the current frame are used for decoding a block, then calculations may be done with RGB components instead of using YUV components. Naturally, the prerequisite for doing such decoding calculations is that at least one past frame and the already decoded blocks of the current frame are available in the RGB color space. A codec and decoder according to the present invention fulfils this requirement.

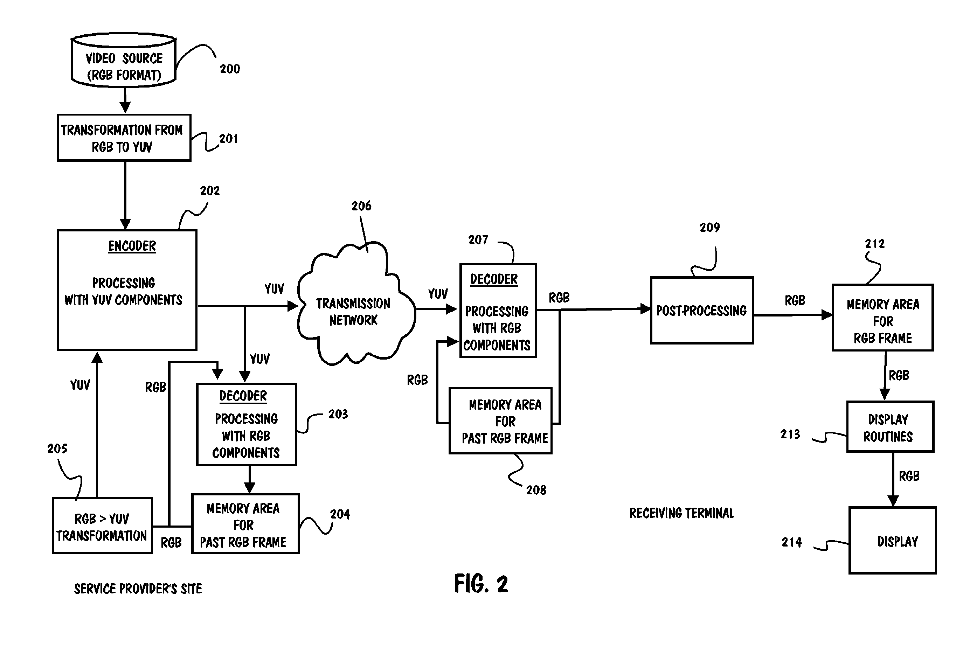

FIG. 2 illustrates the main blocks used for encoding and decoding at a service provider's site and at the receiving terminal. Encoder part 202 of the codec compresses YUV video frames by applying known effective compression methods resulting in a high compression rate. Each frame is divided into a number of non-overlapping blocks, wherein each block is compressed separately. In should be noted that only intra-frame compression methods shall be applied to the blocks of the first frame of the video because no past frames exist yet. Further, the first block of the first frame is compressed without using other pixels than its own pixels. Thus, a compression method applied to the first block is called henceforward "intra block compression mode". An intra-block compression mode may, of course, be applied to any block of a frame. But when compressing subsequent blocks pixels of previous blocks may be used, wherein compression methods that use pixels of neighboring blocks are called henceforward "inter block compression methods".

If necessary, a residual coding may also applied to one or more of the compressed blocks of the frame for removing bits further. Usually residual coding is done to Y- components only.

Decoder part **203** in the feedback loop of the codec may be implemented in two alternative options.

The first feedback option is to store each compressed block of the frame in a memory area reserved for encoder **202** until compression of the whole is completed. Not until then the compressed blocks are fed to the decoder part **203** starting from the block that was compressed first. In this alternative the decoded image that the decoder produces is used for encoding the next frame only.

The second feedback option, which is the best mode, is to decode an encoded block immediately after encoding of the block has been completed. The decoded block may then be used for compressing subsequent blocks of the frame. This is beneficial because such an immediate feedback diminishes calculation errors that the use of a prediction method for compression may cause.

According to the first feedback option the decoder part **203** of the codec receives the whole frame and starts to decode the first block. As has been previously stated, that block was compressed with an intra-block compression method, i.e. without using pixels from other blocks wherein decompression results in an image block having YUV color presentation. The decoder part immediately transforms color presentation from YUV to RGB. Accordingly, color transformation from YUV to RGB is done for any other block of the frame that has been compressed with an intra-block method. Those blocks that have been compressed with an inter-block compression method are decompressed directly to the RGB space. This is possible because intra-block compression methods use prediction, i.e. pixel values from previously decompressed blocks are used for calculation of pixel values of the current block and the pixels used for calculation are already in the RGB color space.

According to the second feedback option the decoder part **203** is decoding the blocks of the frame at the same rate the encoder part is encoding them. Hence, decoded blocks are stored in memory area **204** block by block.

After the whole first frame has been decompressed, the resulting RGB frame is stored in memory area **204**. The encoder **202** that operates with YUV components needs component values of this frame for compressing the next frame. Therefore pixel values of the stored RGB frame have to be transformed to the YUV color space prior to directing them to the encoder. But the decoder **203** operates with RGB components and therefore RGB values can be fed back directly to the encoder **202**.

From the second video frame onwards, the encoder can also use in addition to the intra-frame compression methods inter-frame compression methods, because past frames now exists. In other words, compression methods utilizing motion estimation are now available. However, the decoder **203** ope rates just as explained above when an inter-frame compression method has been applied to a block of the frame to be decoded. Furthermore, if a block has been compressed with an inter-frame compression method, the past frame is accessible in the memory **204**. Thus, the pixel values that are needed for decompressing a block are read from the memory **204**. The values are presented in RGB color space and calculations are performed with RGB values, too. After a frame has been decompressed, the resulting RGB frame is temporarily stored in memory area **204**.

A receiving terminal receives the encoded video via the transmission network **206.** The color representation of the encoded video is YUV. However, the decoder **207** has been instructed to operate similarly to decoder **203** of the codec at the transmitting end. In other words, instead of using YUV color components, the decoder **207** uses RGB components for decompression calculations. Only those blocks that have been encoded with an intra-block compression method, i.e. without using pixel information of neighboring blocks, are processed with YUV color components included in the received video. However, each resulting block with YUV color representation is transformed immediately to the RGB color space. It is worth noting that many intra-block compression methods allow decoding of a block in RGB space almost on the fly. For example, if a block has been compressed in a discrete cosine transformation (DCT) method, decompressing may be done by decoding luminance values of the whole block at once and color values are transformed directly to RGB values. In the most favorable case the YUV values of only one pixel are needed at a time; the luminance values have been already decoded and the decoding of the color values is done pixel by pixel during the progression of the decoding of the block. Therefore, YUV values of at least one pixel or at most one block at a time are in the YUV format in the decoder **207**. Other blocks that have been encoded either with an intra-frame compression method using pixel values of previous blocks or an inter-frame compression method using motion estimation are decompressed directly with RGB components that indeed are available from the previously decoded blocks of the same frame or that are accessible in memory area **208** where at least one past frame in the RGB format is stored.

The resulting frame in the RGB format is stored in memory area **208** from which the decoder **207** reads it and uses its information about the past RGB frame for decoding intra-frame blocks of the next (current) frame.

When the decoding is done using RGB components instead of YUV components, the resulting images may differ slightly. In other words $C_{YUV2RGB}(f(YUV)) \neq f(C_{YUV2RGB}(YUV))$, where $C_{YUV2RGB}()$ denotes the YUV-to-RGB conversion and f() the decoding. Differences arise due to rounding errors in calculations, as well as to the different resolution of the U and V components in YUV representation when compared to the one used for RGB. These differences could cause the decoded images to drift from those seen by the encoder and any visible artifacts may get worse or magnified in later images of the video. This problem is solved by means of a feedback loop in the encoder, such that, after each coding decision, the encoder knows the exact decoding result or state in the decoder. In practice this can be done so that when the decision is made in the encoder to encode a given block with some method M, the encoding programs instructs the decoder to decode this block in RGB space. The encoder can then use this result as input for all the following image blocks and no drifting occurs.

In addition to feeding the resulting frame in the RGB format back to the decoder it is also post-processed in the post-processing unit **209**. This is necessary for removing encoding artifacts. In the state of the art post-processing is done in the YUV color space and as a rule only Y components are processed. Due to the fact that traditional post-processing consists of calculating weighted sums of Y-values, post-processing could also be done directly in the RGB color space. In the invention the need for process block borders is met by approximating Y-values from the RGB values of the pixels near block borders using the following formula:

$$Y=2*R+4*G+B \; (2) \tag{2}$$

Using approximated Y values any known post-processing method can be applied as such.

Post-processing may be done after the decoder's feedback loop as in FIG. 2. Information about RGB components is read directly from a memory area reserved for the decoder **207**. The post-processing unit may also be in the feedback loop, wherein the post-processed frame may be used as a past frame for the decoder. The prerequisite for this option is that the feedback loop of the decoder at the transmitting end also contains a post-processing unit.

The post-processed RGB frame is stored in memory area **212** from which display routines **213** read it for showing on the display **214** of the receiving terminal.

Today's mobile devices come with different native color depths: usually these are either RGB444 (four bits for each channel) or RGB565 (5 bits for channels red and blue, and 6 bits for the green channel). Also RGB888 (eight bits per channel) is possible. If the codec at the transmitting end is designed to keep decoded images in the same color format and depth as used by the mobile device, the decoded frames can be drawn to display without any additional time and memory-consuming conversions. In FIG. 2 it is assumed that the case is such, therefore color depth conversion in not carried out.

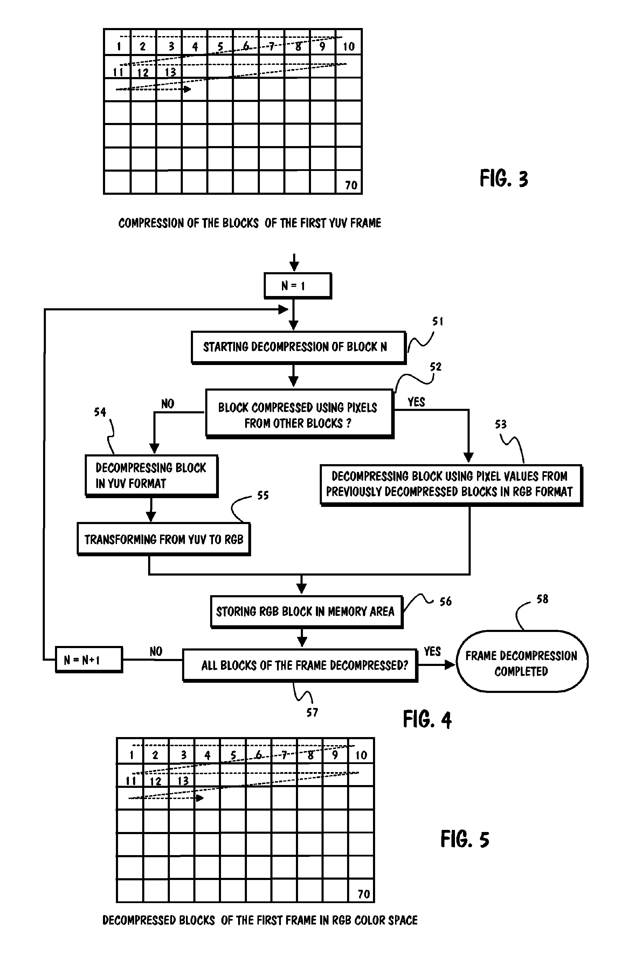

FIG. 3 depicts the first YUV frame that a receiving terminal has received. In this example, the frame is divided into 70 blocks that are numbered in a zigzag form **1** to **70**. The decoder decodes blocks one by one starting from block 1. Naturally any other numerical and correspondingly decoding order may be used.

FIG. 4 illustrates the decoding phases. When starting to decompress block N the decoder first examines decoding information related to this block; **step 51**. The information tells whether the block has been compressed with an intra-block compression method or an inter-block compression method; **step 52**. Furthermore, the information also instructs the decoder to use RGB component values for decoding.

In the first case all the information that is needed to decompress the block is included in the received block data itself. Therefore, decompression of the block results in the image being in the YUV format; **step 54**. The YUV image is transformed immediately to the RGB format, **step 55**, and stored in a memory area in that format; **step 56**. Many compression modes also allow decompression of the block almost directly in the RGB color space so that only a few pixels in the YUV format exist during decompression. Pursuant to this, the decoder contains one block of the YUV format at most and in addition, the existence of such a block or a part of it in the YUV format is very short.

In the latter case a prediction method is used for encoding a block, i.e. pixel values of neighboring blocks are used for calculating pixel values of the block. Thus, pixel values of previously decompressed blocks of the RGB format are fetched from the memory and decompression is done with the aid of those pixels; **step 53**. Finally, the block is stored in a memory area in the RGB format; **step 56**.

Then it is examined whether all the blocks of the frame have been decompressed, **step 57**. If not, then the next block in order of FIG.3 will be decompressed. If yes, compression of the whole frame has been completed, **step 58**, and compression of the next frame starts.

After the whole frame has been decoded, the decoded frame now in the RGB format is stored in memory from which the decoder can read it for using as the past frame. FIG. 5 depicts the content of the memory that contains the decoded blocks in which the color representation is RGB.

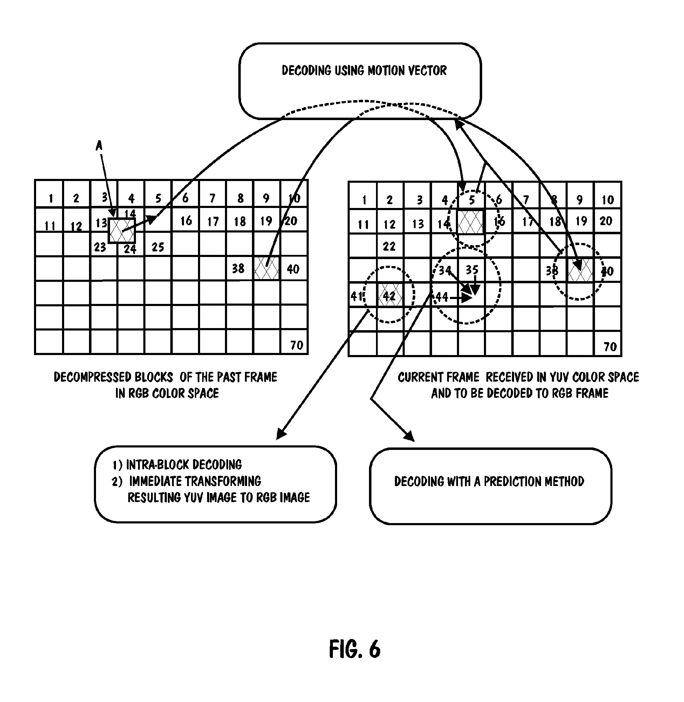

FIG. 6 illustrates basic decoding principles of the present invention. On the left is depicted a frame comprising of 70 blocks. The frame has been decoded according to the present invention, wherein the frame represents an image in the RGB color space. Thus, each block represents a part of the image in the RGB color space. The frame acts as the past frame that the decoder needs for decoding the current frame depicted on the right side.

The current frame was received via a transmission network and the frame has been encoded using YUV color components. As an example decompression of four blocks are considered. The blocks are block **15**, block **39**, block **42**, and block **45**.

Upon starting decompression of block **15** of the current frame the received data instructs the decoder to utilize a motion compensation method. Motion compensation means basically that an area of some previous picture in a video is copied to the currently decoded picture. The amount of movement between two pictures need not be limited to an integer number of pixels and, for example, movements or motion vectors with a half-pixel or quarter-pixel accuracy can be used. Hence, when the current frame was encoded it was found that some pixels covering a part of blocks 13,14, 23, and 24 of the past frame have moved to block **15** of the current frame. Thus, the motion vector of the hatched square **A** in the past frame points to block **15** of the current frame. Despite the codec at the transmitting end having calculated motion estimation for every color component, Y, U and V, the calculations for decoding block 15 can be made similarly for the R, G and B color components. The pixels using those components are directly available from the memory storing the past frame. In consequence, the decoder simply inserts pixels from the square A in the past RGB frame to the block 15 of the current frame.

The above-described method applies also to decoding block **39**. Accordingly, the received data relating to this block instructs the decoder to insert pixels from block **39** of the past frame into block **39** of the current frame. In this case the motion vector is zero, i.e. pixels are not moved sideward. Again, the pixels of the past frame are represented in the RGB color space, wherein decoding of block **39** results directly in pixels in the RGB color space.

Now, decoding of block **42** is considered. The received data relating to this block instructs the decoder to perform decoding without using pixels from neighboring blocks or the past frame. In other words, the block has been compressed with an intra-block compression method. Therefore decompression of this block uses YUV data, wherein the resulting decompressed block is accordingly in the YUV color space. However, many compression modes also allow decompression of the block almost directly into the RGB color space so that only a few pixels in the YUV format exist during decompression. Anyhow, the decoded block, or a part of it, is stored in the memory only for a very short time because the decoder transforms the block immediately into the RGB color space, wherein the RGB block replaces the YUV block in the memory.

Finally, decoding of block 4**5** is considered. The received data pertinent to this block instructs to decompress the block with the aid of pixels of neighboring blocks **34**, **35**, and **44** of the same frame. In other words, the block has been compressed with an intra-frame method, more precisely with a prediction method, wherein pixels for an area of a picture to be decoded are calculated from other pixels, often neighboring, in the same picture. Hence, some pixel values from already decoded blocks 34, 35 and 44 are fetched from the memory to use for decompression calculations. The pixel values represent values of the RGB color components. However, decompression calculations that traditionally are applied to each color component in the YUV color space are also applicable in the RGB color space. Decompression yields a image block whose pixels are in the RGB color space. The decoded block is stored in the memory.

In summary, each block of the frame is decompressed along the guidelines given above. After the decompression has been completed, the resulting RGB frame is directed to the post-processing unit and further to the display of the device. Said frame is also stored in the memory to be used by the decoder as the past frame when the next frame is being decompressed.

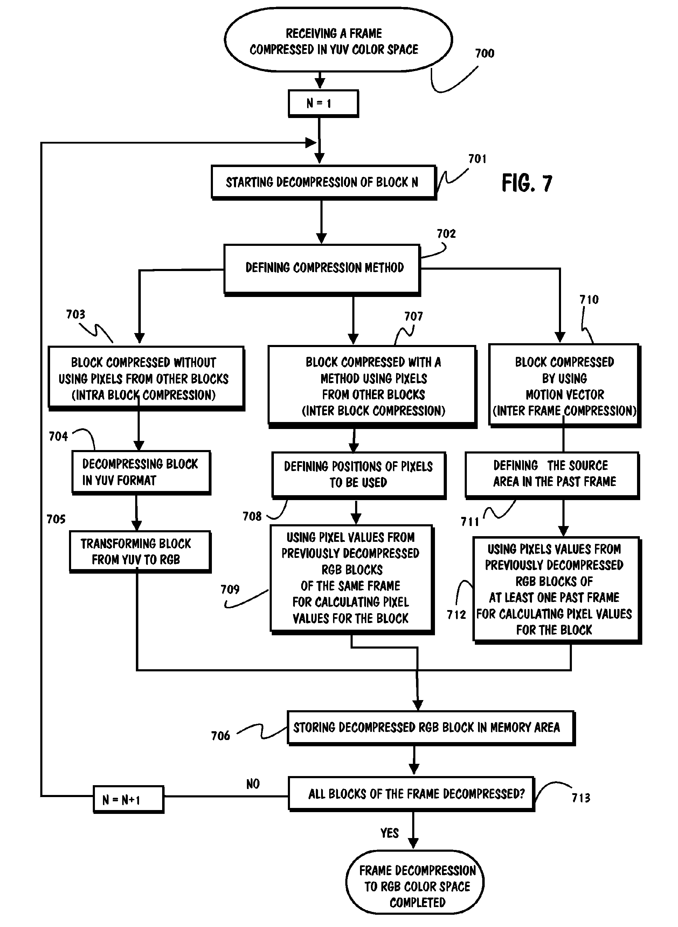

FIG. 7 is a flow chart illustrating method steps the decoder uses for decompressing any frame subsequent to the first frame. After receiving a frame that has been encoded in the YUV format, **step 700**, the decoder starts decoding the first block, **step 701**, by defining the compression method, **step 702**. Information about that is included in data relating to the block.

The decoder finds out that the block has been compressed with an intra-block compression method, i.e. without using pixel values of other blocks of the same frame, **step 703**. The decoder then applies the proper decompression method that produces pixels of the block in the YUV format, **step 704**. The pixel values are transformed immediately into RGB values, **step 705**, and stored in a memory area, **step 706**. Operative units of the decoder share a common memory but an own memory area is assigned to each operative unit.

In case the decoder finds out that the block has been compressed with an inter-block compression method, i.e. with using pixel values of other blocks of the same frame, **step 707**, it determines what are the pixels and their values that are needed for calculating values for pixels of the block, **step 708**. RGB component values of the pixels are read from the memory and used for calculating component values for the pixels of the block, **step 709**. Then the RGB pixel values are stored in the memory area.

If the decoder has been instructed to decode the block that has been compressed with an inter-block compression method, i.e. using motion vectors, **step 710**, it determines based on the motion vector what are the pixels and their values in the past frame, **step 711**. The decoder reads the RGB component values of those pixels from the memory storing the past frame and uses the values for calculating values for pixels of the block, **step 712**. Then the RGB pixel values of the block are stored in the memory area, **step 706**.

Then it is checked whether all blocks of the frame are decompressed, **step 713**. If not decompression of the next block is started. If decompression of the frame has been completed, decompression of the next frame begins.

In case a residual coding has been applied to the Y components of the compressed video block, the decoder of the receiving terminal has to restore residual coded Y components. In the prior art the value of Y component must be changed in relation to the difference D. A problem is how to do this because the decoder operates with RGB color components and no YUV co m-ponents exist. The inventors have solved the problems as follows.

The difference D has to be transformed from the YUV color space to the RGB color space. R, G, and B can be solved from the known formula (1), wherein it is obtained:

$$R = Y + (1.4075 * V)$$
$$G = Y - (0.3455 * U) - (0.7169 * V) \qquad (2)$$
$$B = Y + (1.7790 * U)$$

For Y' that is the same as Y+D, the same equations are

$$R' = Y' + (1.4075 * V)$$

$$G' = Y' - (0.3455 * U) - (0.7169 * V) \qquad (3)$$
$$B' = Y' + (1.7790 * U)$$

Changes of R, G, and B are obtained by subtracting (2) from (3):

$$Dr = R' - R = Y' + (1.4075 * V)) - (Y + (1.4075 * V)) = Y' - Y = D$$

$$Dg = G' - G = Y' - (0.3455 * U - (0.7169 * V) - (Y - (0.3455 * U -$$

$$(0.7169 * V)) = Y' - Y = D$$

$$Db = B' - B = Y' + (1.7790 * U) - (Y + (1.7790 * U)) = Y' - Y = D$$

As a result, the difference D is the same for each of color components R, G and B. Therefore, restoring residual coded components may be performed by applying the same difference to each RGB component.

While the present specifications have presented what is now believed to be the preferred embodiments of the invention, it is noted that the examples provided are easily extendible and modifiable in manners that will be obvious to those skilled in the art, and that the skilled person may see additional embodiments that are derived from the disclosure provided herein, and that the scope of the invention extends to such embodiments, extensions, modifications and equivalents of the invention disclosed herein.

## Claims

1. A method for encoding an uncompressed video frame in a compression color space comprising a separate brightness component (Y) and separate color components by compressing said frame block by block with a compression mode selected from a set of intra-frame compression modes using pixels from the current frame and inter-frame compression modes using pixels from at least one past frame,
   **characterized by** the steps of:

   decoding an encoded block directly into an actual color space of the display of a receiving terminal,
   using pixel values of the decoded block along with pixel values of previously decoded blocks and/or pixel values from at least one past frame in the actual color space for decoding subsequent blocks of the video frame, said pixel values being in the actual color space,

storing the decoded video frame in the actual color space in a memory,

utilizing the stored video frame in the actual color space as the past frame for decoding the next encoded video frame,

transforming the color space of the decoded frame stored in the memory from the actual color space into the compression color space,

utilizing the frame transformed into the compression color space as the past frame for encoding the next uncompressed video frame.

2. The method as in claim 1, **characterized in that** the actual color space is RGB and the compression color space is YUV.

3. The method as in claim 1 or 2, **characterized in that** decoding of a block compressed in an intra-block mode is performed in the compression color space and the decoded block is transformed immediately to the actual color space.

4. The method as in claim 1 or 2, **characterized in that** the decoding of a block compressed in an intra-block mode is performed by decoding brightness (Y) values of the whole block at once and by transforming color values (U, V) directly to the actual color space.

5. The method as in claim 1, **characterized in that** a residual coding is applied to the brightness components (Y) of the frame prior to directing the frame for decoding and to a transmission network.

6. The method as in claim 1, **characterized in that** the encoded block is decoded immediately.

7. A method for decoding an encoded video frame compressed in a compression color space comprising a separate brightness component (Y) and separate color components, said encoded video frame being compressed block by block with a compression mode selected from a set of intra-frame compression modes using pixels from the current frame and inter-frame compression modes using pixels from at least one past frame,
**characterized by** the steps of:

decoding the encoded video frame block by block directly into an actual color space of the display of a receiving terminal by using blocks previously decoded in the actual color space for decoding subsequent blocks of the video frame,

directing the decoded video frame in the actual color space to post-processing,

storing the decoded video frame in the actual color space in a memory,

utilizing the decoded video frame in the memory as a past frame for decoding the next encoded video frame.

8. The method as in claim 7, **characterized in that** the actual color space is RGB and the compression color space is YUV.

9. The method as in claim 7 or 8, **characterized in that** the decoding of a block compressed in an intra-block mode is performed in the compression color space and the decoded block is transformed immediately to the actual color space.

10. The method as in claim 7 or 8, **characterized in that** the decoding of a block compressed in an intra-block mode is performed by decoding brightness (Y) values of the whole block at once and by transforming color values (U, V) directly to the actual color space.

11. The method as in claim 7, **characterized in that** the encoded block is decoded immediately.

12. The method as in claim 8, **characterized in that** in the post-processing is performed by first approximating Y-values of RGB pixels near block borders according to the formula Y=2*R+4*G+B and if differences between Y values exceed a threshold then the RGB values are averaged..

13. The method as in claim 8, **characterized in that** residual coded brightness (Y) components in the received frame are decoded in the RGB color space by applying the same difference D for each RGB color component, wherein residual decoded components R', B' G' are R'= R+D, B' = B+D and G' = G+D.

14. A codec for encoding an video frame, divided into a plurality of blocks, in a compression color space comprising a separate brightness component (Y) and separate color components, the codec comprising an encoder (202), a decoder (203), and a memory (204), **characterized in that**:

   an encoder (202)is adapted to encode the video frame in the compression colors space block by block with a compression mode selected from a set of intra-frame compression modes using pixels from the current frame and inter-frame compression modes using pixels from the past frame,
   a decoder (203) is adapted to decode an encoded block directly into an actual color space of the display of a receiving terminal, using decoded blocks of the frame and at least from one past frame in the actual color space for decoding subsequent blocks of the frame,
   a memory (204) is adapted to store the decoded frame in the actual color space and to feed back said video frame to the decoder for utilizing as the past frame for decoding the next encoded video frame, and
   a color space transformer (205) is connected to the memory (204) and the encoder (202), for changing the actual color space of the decoded frame read from the memory (204) into the compression color space prior to directing to the encode (202)r.,

15. The encoder as in claim 14, **characterized in that** the actual color space is RGB and the compression color space is YUV.

16. A decoder for decoding an encoded video frame received via a transmission network (206), said frame being compressed in a compression color space comprising a separate brightness component (Y) and separate color components block by block with a compression mode selected from a set of intra-frame compression modes using pixels from the current frame and inter-frame compression modes using pixels from the past frame, the decoder comprising a decoding unit (207) for decoding the encoded video frame block by block , and a memory (208) connected to the decoding unit, for storing the decoded video frame to be used as a past frame,
   **characterized in that**
   the decoding unit (207) is adapted to decode blocks of a frame directly into an actual color space of a display, wherein blocks already decoded in the actual color space are used for decoding subsequent blocks of the frame, and
   the memory (208) contains decoded blocks in the actual color space to be used as a past frame for decoding the next encoded video frame,
   wherein the decoding unit outputs the decoded frame directly in the actual color space.

17. The decoder as in claim 16, **characterized in that** the actual color space is RGB and the compression color space is YUV.

18. The decoder as in claim 16 or 17, **characterized by** a post-processing unit (209) for processing the decoded video frame in the actual color space

19. The decoder as in claim 17, **characterized in that** the decoder is adapted to perform residual decoding by applying the same difference D for each RGB color component, wherein residual decoded components R', B' G' are R'= R+D, B' = B+D and G' = G+D.

EP 1 589 761 A1

VIDEO SOURCE
(RGB FORMAT) ⟋ 100

TRANSFORMATION FROM
RGB TO YUV ⟋ 101

102

ENCODER

PROCESSING WITH YUV
COMPONENTS

YUV FRAME

106

TRANSMISSION
NETWORK

YUV

107

DECODER
PROCESSING WITH
YUV COMPONENTS

YUV

POST-PROCESSING
(Y component only)

YUV

MEMORY AREA
FOR
POST-PROCESSED
YUV FRAME

YUV

112

TRANSFORMATION
YUV > RGB

COLOR DEPTH
CONVERSION

RGB

RGB FRAME
STORED IN
MEMORY AREA

DECODER

PROCESSING
WITH YUV
COMPONENTS ⟋ 103

YUV

109

110

111

YUV

MEMORY AREA
FOR
PAST YUV FRAME

113

DISPLAY
ROUTINES

108

YUV

MEMORY AREA
FOR PAST YUV FRAME ⟋ 104

RECEIVING TERMINAL

114

DISPLAY

SERVICE PROVIDER'S SITE

**FIG. 1**          PRIOR ART

FIG. 2

**SERVICE PROVIDER'S SITE**

- 200 VIDEO SOURCE (RGB FORMAT)
- 201 TRANSFORMATION FROM RGB TO YUV
- 202 ENCODER — PROCESSING WITH YUV COMPONENTS
- 203 DECODER — PROCESSING WITH RGB COMPONENTS
- 204 MEMORY AREA FOR PAST RGB FRAME
- 205 RGB > YUV TRANSFORMATION
- 206 TRANSMISSION NETWORK

**RECEIVING TERMINAL**

- 207 DECODER — PROCESSING WITH RGB COMPONENTS
- 208 MEMORY AREA FOR PAST RGB FRAME
- 209 POST-PROCESSING
- 212 MEMORY AREA FOR RGB FRAME
- 213 DISPLAY ROUTINES
- 214 DISPLAY

FIG. 3

COMPRESSION OF THE BLOCKS OF THE FIRST YUV FRAME

FIG. 4

FIG. 5

DECOMPRESSED BLOCKS OF THE FIRST FRAME IN RGB COLOR SPACE

DECODING USING MOTION VECTOR

A

| 1 | 2 | 3 | 4 | 5 | 6 | 7 | 8 | 9 | 10 |
|---|---|---|---|---|---|---|---|---|---|
| 11 | 12 | 13 | 14 | | 16 | 17 | 18 | 19 | 20 |
| | | 23 | 24 | 25 | | | | | |
| | | | | | | | 38 | | 40 |
| | | | | | | | | | |
| | | | | | | | | | |
| | | | | | | | | | |
| | | | | | | | | | 70 |

DECOMPRESSED BLOCKS OF THE PAST FRAME
IN RGB COLOR SPACE

| 1 | 2 | 3 | 4 | 5 | 6 | 7 | 8 | 9 | 10 |
|---|---|---|---|---|---|---|---|---|---|
| 11 | 12 | 13 | 14 | | 16 | 17 | 18 | 19 | 20 |
| | 22 | | | | | | | | |
| | | | | 34 | 35 | | | 38 | 40 |
| 41 | 42 | | 44 | | | | | | |
| | | | | | | | | | |
| | | | | | | | | | |
| | | | | | | | | | 70 |

CURRENT FRAME RECEIVED IN YUV COLOR SPACE
AND TO BE DECODED TO RGB FRAME

1) INTRA-BLOCK DECODING
2) IMMEDIATE TRANSFORMING
   RESULTING YUV IMAGE TO RGB IMAGE

DECODING WITH A PREDICTION METHOD

FIG. 6

EP 1 589 761 A1

**FIG. 7**

```
        ┌────────────────────────────┐
        │     RECEIVING A FRAME       │
        │  COMPRESSED IN YUV COLOR    │  700
        │          SPACE             │
        └────────────────────────────┘
                     │
              ┌─────────────┐
              │    N = 1     │
              └─────────────┘
                     │
        ┌────────────────────────────┐
        │ STARTING DECOMPRESSION OF   │  701
        │        BLOCK N              │
        └────────────────────────────┘
                     │
        ┌────────────────────────────┐
        │ DEFINING COMPRESSION METHOD │  702
        └────────────────────────────┘
```

703 — BLOCK COMPRESSED WITHOUT USING PIXELS FROM OTHER BLOCKS (INTRA BLOCK COMPRESSION)

707 — BLOCK COMPRESSED WITH A METHOD USING PIXELS FROM OTHER BLOCKS (INTER BLOCK COMPRESSION)

710 — BLOCK COMPRESSED BY USING MOTION VECTOR (INTER FRAME COMPRESSION)

704 — DECOMPRESSING BLOCK IN YUV FORMAT

DEFINING POSITIONS OF PIXELS TO BE USED

DEFINING THE SOURCE AREA IN THE PAST FRAME

705 — TRANSFORMING BLOCK FROM YUV TO RGB

708 — USING PIXEL VALUES FROM PREVIOUSLY DECOMPRESSED RGB BLOCKS OF THE SAME FRAME FOR CALCULATING PIXEL VALUES FOR THE BLOCK

709

711 — USING PIXELS VALUES FROM PREVIOUSLY DECOMPRESSED RGB BLOCKS OF AT LEAST ONE PAST FRAME FOR CALCULATING PIXEL VALUES FOR THE BLOCK

712

706 — STORING DECOMPRESSED RGB BLOCK IN MEMORY AREA

N = N+1 — NO — ALL BLOCKS OF THE FRAME DECOMPRESSED? — 713

YES

FRAME DECOMPRESSION TO RGB COLOR SPACE COMPLETED

**European Patent Office**

## EUROPEAN SEARCH REPORT

Application Number

EP 04 10 1594

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | BARTKOWIAK M: "Optimized YCrCb to RGB conversion for realtime decoding of MPEG-2 video" INTERNATIONAL CONFERECE ON SIGNALS AND ELECTRONIC SYSTEMS ICSES 2001, LODZ, POLAND, 18-21 SEPTEMBER 2001, 18 September 2001 (2001-09-18), pages 209-213, XP008033745 * the whole document * | 16,17,19 | H04N7/26 |
| Y | | 1,2,5,6, 14,15 | |
| Y | RICHARDSON I E C: "Video Codec Design" 2002, JOHN WILEY & SONS, LTD , 0-471-48553 5 , XP002291655 * Chapter 3 - Image and Video Compression Fundamentals, paragraph 3.4.1 - Frame Differencing * | 1,2,5,6, 14,15 | |
| A | SIMA M ET AL: "Color space conversion for MPEG decoding on FPGA-augmented trimedia processor" PROCEEEDINGS OF THE APLLICATION-SEPCIFIC SYSTEMS, ARCHITECTURES, AND PROCESSORS, ASAP 03, IEEE 2003, 24 June 2003 (2003-06-24), pages 241-250, XP010645225 * the whole document * | 1-6, 14-17,19 | TECHNICAL FIELDS SEARCHED (Int.Cl.7) H04N |
| A | US 6 108 383 A (AMERES ERIC ET AL) 22 August 2000 (2000-08-22) * abstract * * figure 1 * | 1-6, 14-17,19 | |

~~The present search report has been drawn up for all claims~~

| Place of search | Date of completion of the search | Examiner |
|---|---|---|
| The Hague | 16 August 2004 | Wahrenberg, A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 589 761 A1**

European Patent
Office

Application Number

EP 04 10 1594

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-6, 14-17, 19

**European Patent Office**

**LACK OF UNITY OF INVENTION
SHEET B**

Application Number

EP 04 10 1594

The Search Division considers that the present European patent application does not comply with the requirements of unity of invention and relates to several inventions or groups of inventions, namely:

1. claims: 1-6,14-17,19

   Drift reduction in codec operating in the rgb domain.
   ---

2. claims: 7-13,18

   Artifact reduction in the rgb domain
   ---

**ANNEX TO THE EUROPEAN SEARCH REPORT
ON EUROPEAN PATENT APPLICATION NO.**                    EP 04 10 1594

This annex lists the patent family members relating to the patent documents cited in the above-mentioned European search report.
The members are as contained in the European Patent Office EDP file on
The European Patent Office is in no way liable for these particulars which are merely given for the purpose of information.

16-08-2004

| Patent document cited in search report | Publication date | Patent family member(s) | Publication date |
|---|---|---|---|
| US 6108383 A | 22-08-2000 | NONE | |

EPO FORM P0459

For more details about this annex : see Official Journal of the European Patent Office, No. 12/82